# EUROPEAN PATENT SPECIFICATION

(11) **EP 2 116 358 B1**
(45) Date of publication and mention of the grant of the patent: **29.06.2016**
(21) Application number: 08156005.4
(22) Date of filing: 09.05.2008
(51) Int. Cl.: B29C 70/44, B29C 70/54

(54) **Method and apparatus for conforming a blank**
Verfahren und Vorrichtung zur Anpassung eines Flansches
Méthode et outillage de mise en forme d'un flanc

(43) Date of publication of application: 11.11.2009
(73) Proprietor: SAAB AB, 581 88 Linköping (SE)
(72) Inventor: Alenby, Torbjörn, 587 37 Linköping (SE); Andersson, Jan, 589 21 Linköping (SE); Petersson, Mikael, 589 51 Linköping (SE); Hallander, Per, 582 12 Linköping (SE); Rudqvist, Claes, 582 12 Linköping (SE)
(74) Representative: Zacco Sweden AB

(56) References cited:
- EP-A- 1 092 529
- WO-A-2008/086022
- FR-A- 2 667 013
- US-A- 4 822 436
- US-A- 5 366 684
- US-A- 5 954 898

## Description

### TECHNICAL FIELD

The present invention relates to a method of conforming a blank onto forming surface sections according to the pre-characterising part of claim 1 and to an apparatus according to the pre-characterising part of claim 10.

The article to be formed is made of a resin composite, such as thermo setting plastic, epoxi resins, thermoplastics, polyester resins, fibreglass reinforced plastics etc.

The present invention relates generally to aircraft industry, but is not limited to that.

### BACKGROUND ART

The production of composite articles requires the use of pressure onto the blank against the forming surface sections. The vacuum bag is used to achieve said pressure such that wrinkles and trapped air in the blank can be forced out under vacuum pressure. The vacuum bag can be used for curing the resin of the blank in an autoclave or in an oven at elevated temperature and pressure. After curing the vacuum bag is removed from the forming tool. The blank can be made by a so called "prepreg" material (layers or plies of fibre material previously impregnated with resin, such as thermosetting resin).

It is desirable that the formation of wrinkles at the location of bevels or other projections (also in a direction towards the forming tool's forming surface sections) of the article is eliminated in the blank during the forming process.

One way to eliminate such wrinkles is described in US 2004/0115299 A1 disclosing a reusable vacuum bag. Herein is described that the vacuum bag can be made thinner within the area of a forming surface having small male or female radii to allow the reusable vacuum bag to more readily stretch and conform the blank to the forming surface.

A problem to be solved In US Patent 5 129 813 is that the evacuation process must be slowed down to reduce the tendency of the vacuum bag to trap air. The suggested solution is to provide a vacuum bag having a plurality of interconnected channels.

US 4 822 436 discloses a bag that has male and female radii being stretchable in use, but the vacuum bag per se is inhibited to stretch. The bag has a highly defined shape with a number of corners and curved sections accomplishing the object of the bag to confirm well to the forming tool without stretching.

FR 2 667 013 discloses an elastic bag or mandrel drawn by vacuum over a forming surface. The bag has a defined shape with a number of corners and curved sections. A deformable wall of the mandrel is preformed to an external shape, which is complementary to an internal shape of the article to be produced.

However, there still is a need to control the shearing process between the plies of the blank when it is formed over the forming tool, for eliminating the risk that wrinkles appear within the plies or in the blank at the location of a bevel or other projections of the article. Other projections can be a step wise thickening of the article wherein the steps project towards the forming surface keeping the outer surface even. There thus still exists a problem how to control the shear within the blank material or between the plies of a lay-up, depending of the actual form of the forming surface sections of the forming tool.

The object of the present invention is to overcome the drawbacks of known technique and to provide a method of conforming the blank onto forming surface sections in a controllable manner.

### SUMMARY OF THE INVENTION

This has been solved by a method being initially described in the introduction, which method is characterised by the characterising features of claim 1.

In such way a forming force, in a direction corresponding with the prolongation of the elongated bag section, will be generated by the elastic vacuum bag within the area of the elongated bag section, which forming force being larger than the forming forces generated by the surrounding sections of the elastic vacuum bag surrounding the elongated bag section. This is due to the fact that the forming force is a function of the stretch (strain) of the elastic vacuum bag, wherein the stretch is dependent of the stiffness of the elastic material of the elastic vacuum bag. A larger stiffness of one section of the elastic vacuum bag means that a larger forming force will be generated by the elastic vacuum bag during the stretching process within this section. Thus the quantity of the forming force can be controlled. By arranging the elongated bag section in a preferred direction relatively the article to be formed, the direction of the forming force can also be controlled in an optimal way for forming the blank over the elongated forming surface section, being for example bevelled. At the same time there is achieved that a starting point for forming the blank over the bevel can be predetermined in an optimal way. This is made by providing one end of the elongated bag section essentially corresponding with the bevel's (or also called elongated forming surface section's) starting point of the forming tool seen in a direction from the centre line when forming the blank over the forming surface sections of the forming tool. By deciding the stiffness of the elongated bag section, the speed that the elongated bag section will conform onto the elongated forming surface section can be controlled. The elongated forming surface section of the forming tool can, seen in a cross section, be concave or convex.

By arranging an elongated bag section to have a stiffening feature, making this section stiffener than sections of the elastic vacuum bag surrounding the elongated bag section, the direction of the forming force and the quantity of the forming force can be controlled in an optimal manner. The forming force generated by the stiffener elongated bag section is larger than the forming forces of the surrounding bag sections.

Preferably, the elastic vacuum bag comprises an elastomeric layer and the elongated bag section being thicker than the surrounding bag sections for achieving said larger stiffness.

Thereby an elastic vacuum bag can be produced by for example a silicone rubber material having adhered thereon a partial elongated bag section making the elastic vacuum bag thicker within this partial elongated bag section, thus making the elastic vacuum bag with a larger stiffness within the area of the elongated bag section. Such an production of the elastic vacuum bag is cost effective, since a strip of silicone rubber can be easily adhered to the elastic vacuum bag depending on the desired properties of the vacuum bag.

The elongated bag section having the larger stiffness can be provided by vulcanization of a strip of the same material as the bag onto the bag within the area of the elongated bag section. Also gluing is possible for achieving a fastening. The elastic vacuum bag can also be achieved by injection moulding or moulding providing the desired elongated bag section.

Alternatively, the elastic vacuum bag can also for example be made of a polymer film, polyamide film, PVC, or other elastic material. Also latex rubber, polyurethane rubber.

Alternatively, the elongated bag section can have the same thickness as the surrounding bag sections and the stiffness is enhanced by integral stiffening members arranged within the area of the elongated bag section. Thereby the elastic vacuum bag can be less bulky for storage purpose. Since several vacuum bags are provided with different configuration depending upon the shape of the article to be produced, these vacuum bags with different characteristics have to be stored when not being used in the forming process.

In such way the forming process can be controlled by stretching the vacuum bag beforehand making both the elongated bag section and the surrounding bag sections of the eastic vacuum bag to stretch before forming them over the tool surface sections. Holding the stretching of the vacuum bag earlier before forming the same over the forming surface sections makes the forming process to be accurate and controllable. This is because the beforehand stretched stiffened elongated section and the stretched surrounding sections of the bag will provide substantial different quantities in forming forces, thus making the direction of the forming forces predictable to estimate. Also, a more stretched elastic vacuum bag will generate larger forming forces, during the evacuation, than a not in beforehand stretched elastic vacuum bag.

Alternatively, the step of evacuating the elastic vacuum bag is preceded by a step of heating the blank for increasing the viscosity.

The heating of the blank can be made till a determined temperature for increasing the viscosity, but not so high that the blank will cure. The viscosity and the friction between plies of the blank are parameters involved with the forming procedure, and by increasing the viscosity, the forming of the blank can also be made with simplicity reducing forming manufacture costs.

Preferably, the elongated forming surface section comprises a concave area.

Thereby the blank can be formed over an elongated forming surface section of the forming tool by means of the elongated bag section, wherein the article can be formed with a bevel without any wrinkles. The stiffener elongated bag section will press and generate shearing forces onto the blank over the concave area, which forces are larger than for the surrounding bag section area due to that the stiffened bag section will generate a larger forming force suitable for forming the bevel's concave area pressing out wrinkles.

Suitably, the forming tool comprises at least one supporting wall being arranged for supporting the elastic vacuum bag such that it is held a distance from said elongated forming surface section.

Hereby the beforehand stretching of the elastic vacuum bag can be made without any mechanical equipment having moving parts. Preferably, the supporting wall surrounds the forming surface sections of the forming tool for providing a lift up of the entire elastic vacuum bag from the forming surface sections. Thereby several stiffened elongated bag sections can act on the blank in any desired area of the forming surface sections.

Alternatively, the step of removing the article is preceded by a step of curing the blank.

In such way the forming process can be integrated in an article finishing procedure.

Preferably, the blank comprises a resin impregnated lay-up of a plurality of plies having reinforcing fibres.

Thus, the forming force generated by the stiffened elongated forming can be divided in shear forces which will make the plies to slide relatively each other as the forming procedure proceeds and the elastic vacuum bag further stretches.

Suitably, the elastic vacuum bag constitutes, before the step of evacuating, a rectangular configuration having long sides parallel with the prolongation of the article.

Thereby the article to be produced can be a beam for an air craft.

This has also been solved by an apparatus being initially described in the introduction, which apparatus is characterised by the characterising features of claim 10.

### BRIEF DESCRIPTION OF THE DRAWINGS

The present invention will now be described by way of example with reference to the accompanying schematic drawings, of which:

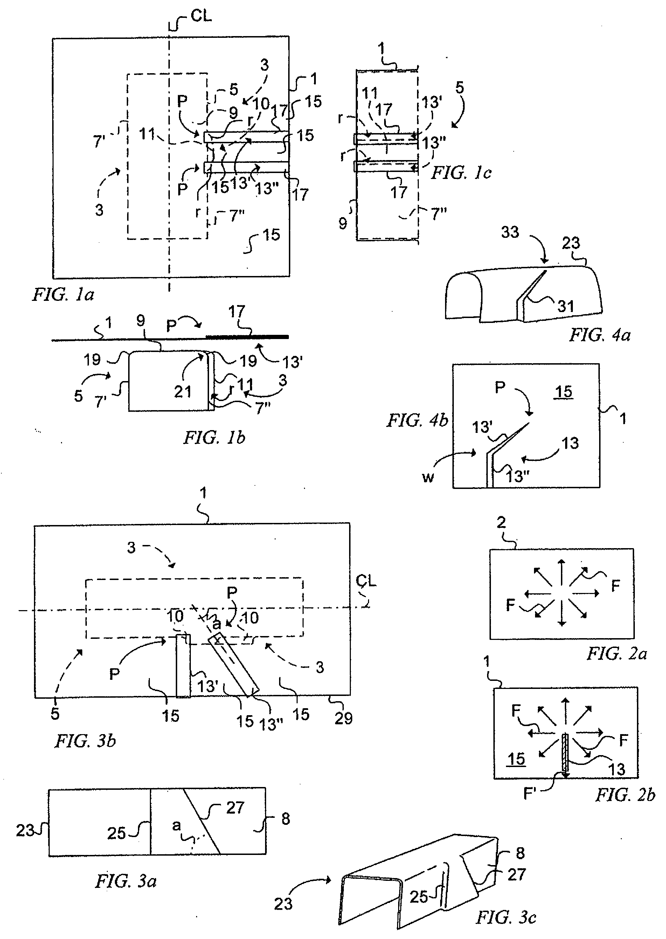

FIG. 1a illustrates from above an elastic vacuum bag being placed over forming surface sections of a forming tool;

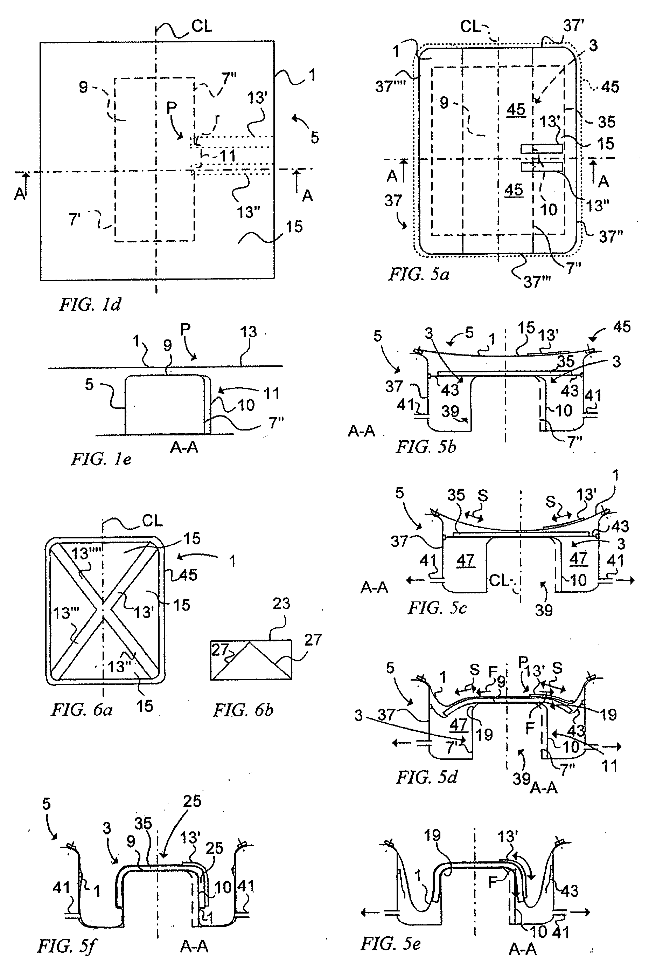

FIG. 1 b illustrates the forming tool in FIG. 1 a in a transverse view;
FIG. 1 c illustrates a side view of the forming tool after completed evacuation of the elastic vacuum bag in FIG. 1 a applying it onto the forming surface sections;
FIG. 1d illustrates from above an elastic vacuum bag according to a second embodiment;
FIG. 1e illustrates a cross section A-A of the forming tool in FIG. 1d;
FIG. 2a illustrates an elastic vacuum bag according to prior art;
FIG. 2b illustrates an elastic vacuum bag according having a stiffened elongated bag section;
FIG. 3a illustrates in a side view of an article to be formed;
FIG. 3b illustrates from above an elastic vacuum bag adapted for forming the article in FIG. 3a according to a third embodiment;
FIG. 3c illustrates the article in FIG. 3a in a perspective view;
FIG. 4a illustrates an article to be formed in a perspective view according to a fourth embodiment;
FIG. 4b illustrates an elastic vacuum bag adapted for forming the article in FIG. 4a;
FIGS. 5a-5f illustrate the steps of forming a blank onto forming surface sections of a forming tool;
FIG. 6a illustrates an elastic vacuum bag from above according to a sixth embodiment;
FIG. 6b illustrates an article to be formed by the elastic vacuum bag in FIG. 6a;
FIG. 7a illustrates an elastic vacuum bag according to a further embodiment;
FIG. 7b illustrates crosswise the forming tool for forming a blank by means of the elastic vacuum bag in FIG. 7a;
FIGS. 8a-8b illustrate a close-up of a cross section of an elongated bag section forming a blank being comprised of a plurality of plies; and
FIG. 9 illustrates a cross section of forming surface sections taken perpendicular to the extension of an elongated forming surface.

### DETAILED DESCRIPTION

Hereinafter, embodiments of the present invention will be described in detail with reference to the accompanying drawings, wherein for the sake of clarity and understanding of the invention some details of no importance are deleted from the drawings.

FIG. 1 a schematically illustrates from above an elastic vacuum bag 1 (herein also called bag) made of an elastomeric material, the bag 1 being placed over forming surface sections 3 of a forming tool 5. The bag 1 is to be sucked onto the forming tool 5 by means of vacuum from a vacuum source (not shown), wherein a blank (not shown) is placed between the bag 1 and the forming surface sections 3 of the forming tool 5. The forming surface sections 3 are comprised of two planar flange forming surface sections 7', 7" and a planar web forming surface section 9 and also being comprised of an elongated forming surface section 10 (or prolonged protrusion 11) extending from one 7" of the planar flange surface sections. The bag 1 comprises two elongated bag sections 13', 13" having a stiffness larger than that of surrounding bag sections 15. Two strips 17 of an elastomeric material is adhered onto the bag 1 for achieving the respective elongated bag section 13', 13". The elongated bag sections 13', 13" are thus thicker than the surrounding bag sections 15 for achieving said larger stiffness. In FIG. 1 a, a dashed and dotted line marks the centre line CL of the forming tool 5 corresponding with the centre line of the article to be formed, here a beam of composite material (not shown).

FIG. 1 b schematically illustrates the forming tool in FIG. 1 a in a transverse view. It is visible that the elongated bag section 13' has the double thickness than that of the major bag area. The bag 1 is arranged to be formed over the forming tool 5 starting with the step of applying the bag 1 onto the web forming surface section 9 and thereafter stretching the bag 1 (and forming the blank 1) over, by means of the vacuum, the flange forming surface sections 7', 7", one of which 7" is provided with said prolonged protrusion 11. This forming procedure starts at the curved edges 19 having male radii curvature between the web forming surface section 9 and the respective flange forming surface section 7' 7" and proceeds with applying the bag 1 onto the forming tool 5 (with the blank there between) following the surface sections 3 in a direction from the centre line CL.

A starting point P of each strip 17 is arranged at the bag 1 at a position of the bag 1 corresponding approximately with the position of an upper edge 21 of the prolonged protrusion 11 of the forming tool 5 (i.e the edge 21 of the prolonged protrusion 11 being nearest the centre line CL). The location of the strips 17 at the bag 1 thus corresponds, when the bag 1 lies against the forming surface sections 7', 7", 9, 11 after completed forming, with the extension of prolonged protrusion 11 (elongated forming surface section 10) of the forming tool 5, and at a position of both sides of the elongated protrusion 11, where the blank requires a forming force being larger than the surrounding bag sections 15.

The female radii r at the transition between flange surface section 7" and the elongated protrusion 11 (each elongated forming surface section thus comprises a concave area) requires a larger forming force for eliminating wrinkles during the forming process and therefore the stiffness of the elongated bag section 13' is larger than the surrounding sections 15 of the bag 1. The inventors of this application have paid attention to that the forming force and the direction of the forming force can be controlled by providing a stiffener elongated bag section, since the forming force is a function of the strain of the elastomer of the bag. They have observed that the thicker bag (or larger stiffness), the larger forming force can be applied onto the blank to be formed. For example, the strain of a suitable elastomer requires, within a bag section having a double thickness, the double force to achieve the same strain as for the surrounding bag sections. Thus, when stretching the bag section having a double thickness an increase of the forming force is produced twice the amount of the general forming force of the surrounding bag sections.

In the FIG. 1a embodiment two elongated bag sections 13', 13" with larger stiffness than the surrounding bag sections 15 are provided for forming the blank over the prolonged protrusion 11, each section 13', 13" is located on respective side of the prolonged protrusion 11 after fulfilled forming. The forming force thus starts at the staring point P and proceeds with a direction corresponding with the direction of the prolongation of the prolonged protrusion 11 as the bag 1 is evacuated and applied onto the forming tool 5 with beginning at the centre line CL.

FIG. 1c illustrates a side view of the forming tool 5 after completed evacuation of the elastic vacuum bag 1 in FIG. 1 a applying it onto the forming surface sections 7', 7", 9, 11. There is shown that the two strips 17 of the bag 1 are stretched onto the female radii r curved sections of the transition between the prolonged protrusion 11 and the flange forming surface section 7" (with a blank formed there between, not shown).

FIG. 1d schematically illustrates a second embodiment from above similar to that in FIG. 1 a, but wherein the elongated bag section 13', 13" has a larger stiffness than surrounding bag sections 15 by integrating stiffening elements (not shown) into the bag 1 within the area of the elongated bag section 13', 13" during the manufacture of the bag 1. The bag 1 will have the same thickness over all the area of the bag 1 which is visible in FIG. 1 e.

FIG. 2a schematically illustrates the principle for a bag 2 according to known technique. When the bag 2 is stretched by vacuum during the forming procedure, forming forces F are created which act on the blank to be formed.

Since the bag 2 has a uniform stiffness, the forming forces F will be the same all over the area of the bag 2. FIG. 2b schematically illustrates the principle of the embodiments described above. The elongated bag section 13' having a stiffness larger than surrounding bag sections 15 provides, when the bag 1 is stretched by vacuum, a forming force F' larger than forming forces F in other directions.

FIG. 3a schematically illustrates a composite article 23 being produced by a method according to a third embodiment. The article 23 comprises a vertical bevel 25 and an inclined bevel 27, both provided at a flange 8 of the article 23. See also FIG. 3c illustrating the article 23 in perspective. For forming the article 23 a bag 1 is provided with two elongated bag sections 13', 13", one of which 13' is projecting from the centre line CL towards a long side 29 (see FIG. 3b) of the bag 1 and is perpendicular to the centre line CL. The other elongated bag section 13" projects from the centre line CL with an inclined angle a corresponding with an angle of the inclined bevel 27 after fulfilled evacuation of the bag 1.

FIG. 4a schematically illustrates a composite article 23 formed by a method according to a fourth embodiment. The bevel 31 of the article 23 is angled, meaning that the forming tool 5 (not shown) comprises an elongated forming surface section being angled in a plane of the flange forming surface section. In FIG. 4b is shown a bag 1 (for forming the article 23 in FIG. 4a) comprising a stiffened elongated bag section 13 being angled at w. Since the end 33 (corresponding with the starting point P) of the bevel 31 of the has a relatively small area to be formed requiring a less forming force, the elongated bag section 13 at the position of the starting point P has a stiffness less than the stiffness of the remaining section of the elongated bag section 13 but larger than the surrounding bag sections 15 surrounding the elongated bag section 13. By arranging the elongated bag section 13 in such way the forming force quantity and the forming force direction can be controlled during the forming process. During the forming process the bag 1 is stretched by the vacuum and the elongated bag section 13' starts at the starting point P to form the blank in a direction of the inclined bevel portion, thereafter at w, the elongated bag section 13" will continue to form the blank by further evacuation onto the elongated forming surface section of the forming tool corresponding with the vertical bevel portion of the article 23, thus making an alteration of the forming force direction at w.

FIG. 5a schematically illustrates a fifth embodiment of a method for forming a blank 35 onto forming surface sections 3. The forming tool 5 comprises a supporting wall 37 divided in four sections 37', 37", 37"', 37"" arranged for supporting the bag 1 such that it is held a distance from the blank 35 and the forming surface sections 3, i.e. also a distance from the elongated forming surface section 10. Between two 37", 37"" of the wall sections a male forming tool body 39 is provided. The male forming tool body 39 corresponds to the form of the forming tool 5 in FIG. 1 a. Also the bag 1 in FIG. 5a has the configuration as presented by the bag in FIG. 1a. The apparatus (forming tool 5) in FIG. 5a thus comprises an elongated bag section 13' having a stiffness larger than that of surrounding bag sections 15. The location of the elongated bag section 13' of the elastic vacuum bag 1 corresponds, when the elastic vacuum bag 1 lies against the forming surface sections 3, with an elongated forming surface section 10 of the forming tool 5. The forming tool comprises the supporting wall 37 being arranged for supporting the elastic vacuum bag 1 such that it is held a distance from said elongated forming surface section 10.

The following FIGS. 5b-5f illustrate schematically the conforming of the blank 35 onto the forming surface sections 3 of the forming tool 5 by drawing vacuum (via vacuum ports 41) against the bag 1 for transmitting forming forces from the bag 1 to the blank 35. The bag 1 comprises two elongated bag sections 13', 13" having a larger stiffness than surrounding bag sections 15. Firstly, the blank 35 is applied onto the forming tool body 39 wherein a supporting membrane 43 is arranged to prevent parts of the blank 35, which are intended for forming of the flanges of the article, to fold by gravity. Thereafter the blank 35 is enclosed by the bag 1 having the stiffened elongated bag sections 13', 13" as shown in FIG. 5b according to a cross section A-A taken in FIG. 5a. The blank 35 is thus enclosed within the elastic vacuum bag 1 by mounting a peripheral edge 45 of the bag 1 onto the forming tool's 5 supporting wall 37. The bag 1 is in a following step as seen in FIG. 5c evacuated by drawing vacuum from a forming tool space 47 (defined by the bag 1, the supporting wall 37 and the forming tool body 39) for allowing the elastic vacuum bag 1 to stretch (indicated by arrows S) and conform the blank 35 to the forming surface sections 3. The bag 1 will stretch initially before reaching the blank 35 at the position of the centre line CL and fixing the blank 35 along the centre line CL by pressing it towards the forming tool body 39. Thereby the bag 1 initially will be stretched before conforming the blank 35 to the elongated forming surface section 10.

Thereafter, the bag 1, as seen in FIG. 5d, press the blank 35 towards the flange forming surface sections 7', 7", starting with pressing the blank 35 at the curved edge 19 (male radii) between flange 7', 7" and web 9 forming surface sections. As the stretching S proceeds, forming forces F develop for forming the blank 35 over the forming tool body 39. As the prolonged protrusion 11 (elongated forming surface section 10) requires extra large forming forces for forming the blank 35 over the prolonged protrusion 11 for avoiding wrinkles, the starting point P of the stiffened elongated bag sections 13', 13" will press and start to form a portion of the blank 35 onto the prolonged protrusion 11 in a direction corresponding with the prolongation of the elongated bag section 13'.

In FIG. 5e is schematically illustrated the further procedure. The bag 1 has ruptured the supporting membrane 43 and the stiffened elongated bag sections 13', 13" have almost formed the blank 35 onto the forming tool body 39 and a forming force F is created by each of the elongated bag sections 13', 13" for forming the last portion of the blank 35 onto the prolonged protrusion 11 adjacent the flange's edge opposite the curved edge 19.

Finally, the elastic vacuum bag 1 lies against the forming surface sections 3 after said completion of the evacuation. The formed blank 35 is in position in between the bag 1 and the forming surface sections 3 as shown in FIG. 5f. The formed blank 35 is cured and thereafter removed from the forming tool 5. The blank 35 now constitutes an article 23 made of plastic. The article 23 has a bevel and is used in an air craft structure (not shown). Since the forming forces by the present method can be controlled during the forming process without the need of manual handwork or mechanical rollers, the production of air craft articles in this way can be cost effective, otherwise involving great costs. It is important that no wrinkles appear in articles designed for an air craft due to safety reasons. A wrinkle may constitute an indication of fracture.

FIG. 6a schematically illustrates an elastic vacuum bag 1 from above according to a sixth embodiment. The bag 1 comprises a peripheral edge 45 to be mounted seal tight against the forming tool 5. The method comprises several elastic vacuum bags, of which only one is illustrated. The others are formed with different elongated bag sections 13 having different characteristics regarding stiffness and angled direction relative the centre line CL. All the bags in the set of bags are mountable and useable for one forming tool 5. Thereby the manufacturer can easily and cost effective change bags (and also forming tool bodies) of the forming tool for different purposes and different desires to direct the forming forces and to achieve proper forming force required for a specific forming surface section. The forming tool 5 comprising the set of different bags 1 and forming tool bodies 39 can thus be used for a plurality of different air craft articles 23, such as beams, panels, bulkheads etc. The bag 1 shown in FIG. 6a comprises four elongated bag sections 13', 13", 13"', 13"", all having the same stiffness, but with a greater stiffness than the surrounding bag sections 15 of the bag 1. The orientation of the elongated bag sections 13', 13", 13"', 13"" of the illustrated bag 1 is such that they form a cross corresponding with the orientation of the bevels 27 of the article 23 when the bag 1 lies against the blank 35 after fulfilled forming.

FIG. 6b schematically illustrates the article 23 to be formed by the bag 1 in the FIG. 6a in an elevated view depicting two of four bevels 27.

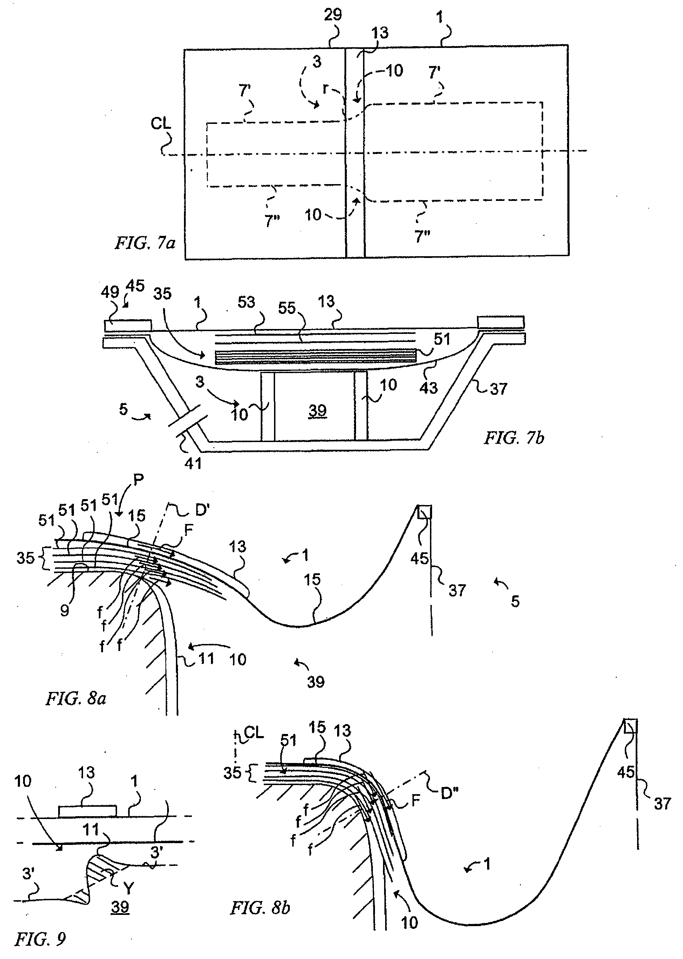

FIG. 7a schematically illustrates an elastic vacuum bag 1 according to a further embodiment. The article (not shown) to be formed has a narrowing transition portion and has a hemicycle cross section. The bag 1 constitutes a rectangular configuration having long sides 29 parallel with the prolongation of the article and with the centre line CL. The elongated bag section 13 is arranged continuously from one long side 29 to the other long side 29 of the bag 1.

FIG. 7b schematically illustrates crosswise the forming tool 5 for forming a blank 35 by means of the elastic vacuum bag 1 in FIG. 7a. However, the specific forming tool body 39 is here represented by a forming tool body having a square cross section with two elongated forming surface sections 10 (narrowing slope). The forming tool comprises the elastic vacuum bag 1, supporting membrane 43, supporting wall 37, forming tool body 39, vacuum port 41, peripheral edge 45 comprising a mounting frame 49. The blank 35 being formed is comprised of a resin impregnated lay-up of a plurality of plies 51 having reinforcing fibres (not shown). The plies 51 are made of so called pre-preg tape and can be produced by using an ATL-machine (automatic tape lying machine). This also will add cost-effectiveness for the method.

A vacuum conveyer (breather) film 53 is arranged between the bag 1 and a release film 55. The supporting membrane 43 includes likewise a release film for easy separating the article from the forming tool 5.

In Fig. 8a is schematically illustrated a close-up of a cross section of a stiffened elongated bag section 13 forming a blank 35 being comprised of a plurality of said plies 51. The blank 35 is not supported by any supporting means as in FIG. 7b. This is not necessary since the blank in this embodiment is self supporting when laid onto the forming tool body. The elastic vacuum bag 1 is shown partly having the peripheral edge 45 mounted higher (seen a direction from the web forming surface section 9 opposite the direction of gravity) than the upper web forming surface section 9 of the forming tool 5. At the dashed and dotted line D' the bag 1 will, due to its stretching under vacuum, exert a forming force F onto the blank 35, at a position corresponding with the starting point P of the stiffened elongated bag section 13, with a beforehand determined quantity and direction due to the arrangement of the stiffened elongated bag section 13. The forming force F being exerted onto the blank 35 can be divided into several shear forces f acting on each ply 51. The shear forces f are dependent on the thickness of the bag in different bag sections 13, 15 and are also dependent on the geometry of the support wall 37 of the forming tool 5. If the blank 35 must be formed over a even more complex forming surface requiring further forming force, a part of the support wall is arranged higher than other parts of the support wall and thus the bag 1 will be stretched even more initially and additional shear forces will be generated onto the blank of that specific complex forming surface. For forming the blank 35 over the prolonged protrusion 11 of the forming tool 5 a larger forming force is needed and the bag 1 is provided thicker (i.e the stiffened elongated bag section 13) within the area of the bag 1 forming said prolonged protrusion 11. The shear forces f will make the plies 51 to slide relatively each other and the blank 35 will be conformed onto the elongated forming surface section 10 of the forming tool 5. Before applying vacuum onto the elastic vacuum bag 1 the blank 35 is heated for increasing the viscosity of the blank material, wherein the plies 51 can slide more easily relative each other.

In FIG. 8b is shown that the bag 1 has been drawn further in a direction from the centre line CL onto the blank 35 and forming the blank onto the elongated forming surface section 10. This is made by the elongated bag section 13 having a greater stiffness generating a greater forming force F than that of the surrounding bag sections 15. At the dashed and dotted line D", the bag 1 will exert a forming force F onto the blank 35 following (and in the same direction as) the prolongation of the elongated bag section 13 (corresponding with the prolongation of the elongated forming surface section 10). Shear forces f will make the plies 51 to further slide relatively each other as the forming procedure proceeds and the bag 1 further stretches.

In FIG. 9 is shown schematically a cross section of an elongated forming surface section 10, which forming surface of the forming tool is provided for forming the blank by means of the bag 1 into an article having an elongated bevel or cavity or protrusion in a plane surface of the article 23. The protrusion or cavity being provided by the elongated forming surface section 10 has, in a cross section taken transverse the prolongation of the elongated forming surface section 10, a smaller cross area Y defined by curvature of the forming protrusion or cavity (which area is defined by the limit of the curvature itself and of a line drawn from the one end of the curvature to the other end of the curvature, than a section taken along the prolongation of the elongated forming surface section 10. In FIG. 9 is shown a cross section of the elongated forming surface section 10 taken crosswise the prolongation of the elongated forming surface section 10. In this case the curvature is S-shaped for making a transition between two plane forming surface sections 3', 3". Due to this elongated forming surface section 10 having a curvature with a small radii (relative the general extension of the surrounding forming surface sections 3' of the forming tool 5), the blank 35 must be formed onto this curvature with a larger forming force (than that applied for the surrounding forming surface sections 3') so that the blank 35 will lie tight onto the forming tool's 5 all forming surface sections 3.

The present invention is of course not in any way restricted to the preferred embodiments described above, but many possibilities to modifications, or combinations of the described embodiments, thereof should be apparent to a person with ordinary skill in the art without departing from the basic idea of the invention as defined in the appended claims. The elongated forming surface section of all embodiments can be concave, convex, or be of other bevelled curvatures having a protrusion or cavity in a plane forming surface section of the forming tool. The present invention can be employed for manufacture of beams, panels, bulkheads etc. in air craft industry. Of course, the formed blank can be removed from the forming surface sections before curing the blank. The curing can be performed later together with another article or even after a post forming procedure. Of course, the supporting membrane in FIG. 7b can be replaced by lamellar supporting device supporting the blank to be formed.

## Claims

1. A method of conforming a blank (35) onto forming surface sections (3) of a forming tool (5) by drawing vacuum against an elastic vacuum bag (1) for transmitting forming forces from the elastic vacuum bag (1) to the blank (35), the elastic vacuum bag (1) comprises at least one bag section having a different stiffness than other bag sections, the method includes the steps of:
- providing the at least one bag section as an elongated bag section (13', 13") having a stiffness larger than that of surrounding bag sections (15), the location of the elongated bag section (13', 13") of the elastic vacuum bag (1) corresponds, when the elastic vacuum bag (1) after said completion lies against the forming surface sections (3) having the blank (35) in between, with an elongated forming surface section (10) of the forming tool (5) where the blank (35) requires a forming force (F) being larger than that of the surrounding bag sections (15);
- applying the blank (35) to the forming tool (5);
- enclosing the blank (35) within the elastic vacuum bag (1) by mounting a peripheral edge (45) of the elastic vacuum bag (1) onto the forming tool (5) such that the elastic vacuum bag (1) initially will be stretched before conforming the blank (35) onto the elongated forming surface section (10);
- evacuating the elastic vacuum bag (1) for allowing the elastic vacuum bag (1) to stretch and conform the blank (35) to the forming surface sections (3);
- stretching the vacuum bag (1) by the vaccum such that the forming force (F), in a direction corresponding with the prolongation of the elongated bag section (13', 13"), is generated by the elastic vacuum bag (1) within the area of the elongated bag section (13', 13"); and
- removing the formed blank (35), constituting an article, from the forming tool (5) after completion of the evacuation.

2. The method according to claim 1, wherein the elastic vacuum bag (1) comprises an elastomeric layer (51) and the elongated bag section (13', 13") being thicker than the surrounding bag sections (15) for achieving said larger stiffness.

3. The method according to claim 1, wherein the step of evacuating the elastic vacuum bag (1) is preceded by a step of heating the blank (35) for increasing the viscosity.

4. The method according to any of the preceding claims, wherein the elongated forming surface section (10) comprises a concave area.

5. The method according to any of the preceding claims, wherein the forming tool (5) comprises at least one supporting wall (37) being arranged for supporting the elastic vacuum bag (1) such that it is held a distance from said elongated forming surface section (10).

6. The method according to any of the preceding claims, wherein the step of removing the article (23) is preceded by a step of curing the blank (35).

7. The method according to any one of the preceding claims, wherein the blank (35) comprises a resin impregnated lay-up of a plurality of plies (51) having reinforcing fibres.

8. The method according to any one of the preceding claims, wherein the elastic vacuum bag (1) constitutes, before the step of evacuating, a rectangular configuration having long sides (29) parallel with the prolongation of the article (23) to be formed.

9. A blank (35) conforming apparatus, which conforms the blank (35) onto forming surface sections (3) of a forming tool (5) by drawing vacuum against an elastic vacuum bag (1) for transmitting forming forces from the elastic vacuum bag (1) to the blank (35), the elastic vacuum bag (1) comprises at least one bag section having a different stiffness than other bag sections, **characterised by** that the at least one bag section is an elongated bag section (13', 13") having a stiffness larger than that of surrounding bag sections (15), the location of the elongated bag section (13', 13") of the elastic vacuum bag (1) corresponds, when the elastic vacuum bag (1) lies against the forming surface sections (3), with an elongated forming surface section (10) of the forming tool (5), wherein the bag (1) is arranged to be stretched by the vacuum generating a forming force (F) by the elastic vacuum bag (1) within the area of the elongated bag section (13', 13"), in a direction corresponding with the prolongation of the elongated bag section (13', 13"), wherein the forming tool (5) comprises at least one supporting wall (37) being arranged for supporting the elastic vacuum bag (1) such that it is held a distance from said elongated forming surface section (10).

## Patentansprüche

1. Verfahren zum Anpassen der Form eines Rohlings (35) an Formflächen-Abschnitte (3) eines Formwerkzeugs (5) durch Ansaugen von Vakuum an einen elastischen Vakuumsack (1) zum Übertragen von Kräften von dem elastischen Vakuumsack (1) auf den Rohling (35), wobei der elastische Vakuumsack (1) wenigstens einen Sackabschnitt umfasst, der eine andere Steifigkeit hat als andere Sackabschnitte, und das Verfahren die folgenden Schritte einschließt:
- Bereitstellen des wenigstens einen Sackabschnitts als einen länglichen Sackabschnitt (13', 13"), dessen Steifigkeit größer ist als die umgebender Sackabschnitte (15), wobei die Position des länglichen Sackabschnitts (13', 13") des elastischen Vakuumsacks (1), wenn der elastische Vakuumsack (1) nach dem Abschluss an den Formflächen-Abschnitten (3) anliegt, zwischen denen sich der Rohling (35) befindet, einem länglichen Formflächen-Abschnitt (10) des Formwerkzeugs (5) entspricht, an dem der Rohling (35) eine Formkraft (F) erfordert, die größer ist als die der umgebenden Sackabschnitte (15);
- Aufbringen des Rohlings (35) auf das Formwerkzeug (5);
- Einschließen des Rohlings (35) in den elastischen Vakuumsack (1) durch Aufsetzen eines Umfangsrandes (45) des elastischen Vakuumsacks (1) auf das Formwerkzeug (5), so dass der elastische Vakuumsack (1) zunächst gedehnt wird, ehe die Form des Rohlings (35) an den länglichen Formflächenabschnitt (10) angepasst wird;
- Evakuieren des elastischen Vakuumsacks (1), um zuzulassen, dass sich der elastische Vakuumsack (1) dehnt und die Form des Rohlings (35) an die Formflächen-Abschnitte (3) angepasst wird;
- Dehnen des Vakuumsacks (1) durch das Vakuum, so dass die Formkraft (F) in einer Richtung, die der Ausdehnung des länglichen Sackabschnitts (13', 13") entspricht, durch den elastischen Vakuumsack (1) innerhalb des Bereiches des länglichen Sackabschnitts (13', 13") erzeugt wird; und
- Entfernen des geformten Rohlings (35), der ein Erzeugnis bildet, von dem Formwerkzeug (5) nach Abschluss der Evakuierung.

2. Verfahren nach Anspruch 1, wobei der elastische Vakuumsack (1) eine Elastomerschicht (51) umfasst und der längliche Sackabschnitt (13', 13") dicker ist als die umgebenden Sackabschnitte (15), um die größere Steifigkeit zu erzielen.

3. Verfahren nach Anspruch 1, wobei dem Schritt des Evakuierens des elastischen Vakuumsacks (1) ein Schritt des Erhitzens des Rohlings (35) zum Erhöhen der Viskosität vorangeht.

4. Verfahren nach einem der vorangehenden Ansprüche, wobei der längliche Formflächen-Abschnitt (10) einen konkaven Bereich umfasst.

5. Verfahren nach einem der vorangehenden Ansprüche, wobei das Formwerkzeug (5) wenigstens eine tragende Wand (37) umfasst, die so eingerichtet ist, dass sie den elastischen Vakuumsack (1) so trägt, dass er in einem Abstand zu dem länglichen Formflächen-Abschnitt (10) gehalten wird.

6. Verfahren nach einem der vorangehenden Ansprüche, wobei dem Schritt des Entfernens des Erzeugnisses (23) ein Schritt des Aushärtens des Rohlings (35) vorangeht.

7. Verfahren nach einem der vorangehenden Ansprüche, wobei der Rohling (35) eine harzimprägnierte Laminierung aus einer Vielzahl von Lagen (51) mit verstärkenden Fasern umfasst.

8. Verfahren nach einem der vorangehenden Ansprüche, wobei der elastische Vakuumsack (1) vor dem Schritt des Evakuierens eine rechteckige Form bildet, die lange Seiten (29) parallel zu der Ausdehnung des zu formenden Erzeugnisses (23) hat.

9. Vorrichtung zum Anpassen der Form eines Rohlings (35), die die Form des Rohlings (35) an Formflächen-Abschnitte (3) eines Formwerkzeugs (5) anpasst, indem sie Vakuum an einen elastischen Vakuumsack (1) saugt, um Kräfte von dem elastischen Vakuumsack (1) auf den Rohling (35) zu übertragen, wobei der elastische Vakuumsack (1) wenigstens einen Sackabschnitt umfasst, der eine andere Steifigkeit hat als andere Sackabschnitte, **dadurch gekennzeichnet, dass** der wenigstens eine Sackabschnitt ein länglicher Sackabschnitt (13', 13") ist, dessen Steifigkeit größer ist als die umgebender Sackabschnitte (15), die Position des länglichen Sackabschnitts (13', 13") des elastischen Vakuumsacks (1), wenn der elastische Vakuumsack (1) an den Formflächen-Abschnitten (3) anliegt, einem länglichen Formflächen-Abschnitt (10) des Formwerkzeugs (5) entspricht, und der Sack (1) so eingerichtet ist, dass er durch das Vakuum gedehnt wird und eine Formkraft (F) durch den elastischen Vakuumsack (1) innerhalb des Bereiches des länglichen Sackabschnitts (13', 13") in einer Richtung erzeugt wird, die der Ausdehnung des länglichen Sackabschnitts (13', 13") entspricht, und das Formwerkzeug (5) wenigstens eine tragende Wand (37) umfasst, die so eingerichtet ist, dass sie den elastischen Vakuumsack (1) so trägt, dass er in einem Abstand zu dem länglichen Formflächen-Abschnitt (10) gehalten wird.

## Revendications

1. Procédé de mise en forme d'un flanc (35) sur des sections de surface de formage (3) d'un outil de formage (5) en aspirant un vide contre un sac sous vide élastique (1) pour transmettre des forces de formage depuis le sac sous vide élastique (1) au flanc (35), le sac sous vide élastique (1) comprenant au moins une section de sac ayant une rigidité différente de celle d'autres sections de sac, le procédé comprenant les étapes consistant à :
- fournir l'au moins une section de sac en tant que section de sac allongée (13', 13") ayant une rigidité supérieure à celle de sections de sac environnantes (15), l'emplacement de la section de sac allongée (13', 13") du sac sous vide élastique (1) correspondant, quand le sac sous vide élastique (1) après ledit achèvement repose contre les sections de surface de formage (3) ayant le flanc (35) entre elles, à une section de surface de formage allongée (10) de l'outil de formage (5) où le flanc (35) nécessite une force de formage (F) supérieure à celle des sections de sac environnantes (15) ;
- appliquer le flanc (35) à l'outil de formage (5) ;
- enfermer le flanc (35) dans le sac sous vide élastique (1) en montant un bord périphérique (45) du sac sous vide élastique (1) sur l'outil de formage (5) de telle sorte que le sac sous vide élastique (1) sera initialement étiré avant de mettre en forme le flanc (35) sur la section de surface de formage allongée (10) ;
- évacuer le sac sous vide élastique (1) pour permettre au sac sous vide élastique (1) d'étirer et de mettre en forme le flanc (35) sur les sections de surface de formage (3) ;
- étirer le sac sous vide (1) par le vide de telle sorte que la force de formage (F), dans une direction correspondant au prolongement de la section de sac allongée (13', 13"), est générée par le sac sous vide élastique (1) dans la zone de la section de sac allongée (13', 13") ; et
- retirer le flanc formé (35), constituant un article, de l'outil de formage (5) après l'achèvement de l'évacuation.

2. Procédé selon la revendication 1, dans lequel le sac sous vide élastique (1) comprend une couche élastomère (51) et la section de sac allongée (13', 13") qui est plus épaisse que les sections de sac environnantes (15) pour obtenir ladite rigidité supérieure.

3. Procédé selon la revendication 1, dans lequel l'étape d'évacuation du sac sous vide élastique (1) est précédée d'une étape consistant à chauffer le flanc (35) pour augmenter la viscosité.

4. Procédé selon l'une quelconque des revendications précédentes, dans lequel la section de surface de formage allongée (10) comprend une zone concave.

5. Procédé selon l'une quelconque des revendications précédentes, dans lequel l'outil de formage (5) comprend au moins une paroi de support (37) étant adaptée pour supporter le sac sous vide élastique (1) de telle sorte qu'est maintenue une distance depuis ladite section de surface de formage allongée (10).

6. Procédé selon l'une quelconque des revendications précédentes, dans lequel l'étape de retrait de l'article (23) est précédée d'une étape de durcissement du flanc (35).

7. Procédé selon l'une quelconque des revendications précédentes, dans lequel le flanc (35) comprend une superposition imprégnée de résine d'une pluralité de plis (51) ayant des fibres de renforcement.

8. Procédé selon l'une quelconque des revendications précédentes, dans lequel le sac sous vide élastique (1) constitue, avant l'étape d'évacuation, une configuration rectangulaire ayant des côtés longs (29) parallèles au prolongement de l'article (23) à former.

9. Appareil de mise en forme de flanc (35), qui met en forme le flanc (35) sur des sections de surface de formage (3) d'un outil de formage (5) en aspirant un vide contre un sac sous vide élastique (1) pour transmettre des forces de formage depuis le sac sous vide élastique (1) au flanc (35), le sac sous vide élastique (1) comprenant au moins une section de sac ayant une rigidité différente de celle d'autres sections de sac, **caractérisé en ce que** l'au moins une section de sac est une section de sac allongée (13', 13") ayant une rigidité supérieure à celle de sections de sac environnantes (15), l'emplacement de la section de sac allongée (13', 13") du sac sous vide élastique (1) correspondant, quand le sac sous vide élastique (1) repose contre les sections de surface de formage (3), à une section de surface de formage allongée (10) de l'outil de formage (5), dans lequel le sac (1) est conçu pour être étiré par le vide générant une force de formage (F) par le sac sous vide élastique (1) dans la zone de la section de sac allongée (13', 13"), dans une direction correspondant au prolongement de la section de sac allongée (13', 13"), dans lequel l'outil de formage (5) comprend au moins une paroi de support (37) agencée pour supporter le sac sous vide élastique (1) de telle sorte qu'est maintenue une distance depuis ladite section de surface de formage allongée (10).
